# EUROPEAN PATENT APPLICATION

(11) **EP 1 195 717 A2**
(43) Date of publication of application: **10.04.2002**
(21) Application number: 01120048.2
(22) Date of filing: 21.08.2001
(51) Int. Cl.: G06T 15/00

(54) **Controller for rendering pipelines**

(30) Priority: 04.10.2000 US 679315
(71) Applicant: TeraRecon, Inc., San Mateo, California 94403 (US)
(72) Inventor: Seiler, Larry D., Boylston, Massachusetts 01505 (US); Burgess, Stephen R., Medfield, MA 02052 (US); Lussier, Jeffrey, Woburn, MA 01801 (US); Bhatia, Vishal C., Arlington, MA 02474 (US)
(74) Representative: Gleiter, Hermann

(57) **Abstract**

The invention provides a method and apparatus for rendering graphic data as an image. Graphic data that possibly contribute to the image is identified. The identified graphic data is read into a rendering pipeline. Samples are generated in the rendering pipeline only if they possibly contribute to the image for the identified graphic data. The identified graphic data and samples are processed in the rendering pipeline only as long as the identified graphic data and sample continue to contribute to the image. All other identified graphic data and samples are discarded from the pipeline.

## Description

### Cross-Reference to Related Application

This is a continuation-in-part of U.S. Patent Application. 09/410,770 *"Voxel and Sample Pruning in a Parallel Pipelined Volume Rendering System,"* filed by Lauer et al. on October 1, 1999.

### Field of the Invention

The present invention is related to the field of computer graphics, and in particular to rendering graphic data with a parallel pipelined rendering engine.

### Background of the Invention

Volume rendering is often used in computer graphics applications where three-dimensional data need to be visualized. The volume data can be scans of physical or medical objects, or atmospheric, geophysical, or other scientific models where visualization of the data facilitates an understanding of the underlying real-world structures represented by the data.

With volume rendering, the internal structure, as well as the external surface features of physical objects and models are visualized. Voxels are the fundamental data items used in volume rendering. A voxel is data that represent values at a particular three-dimensional portion of the object or model. The coordinates (*x*, *y*, *z*) of each voxel map the voxels to positions within the represented object or model.

A voxel represents one or more values related to a particular location in the object or model. For a given prior art volume, the values contained in a voxel can be one or more of a number of different parameters, such as, density, tissue type, elasticity, or velocity. During rendering, the voxel values are converted to color and opacity (RGBα) values in a process called classification. These RGBα values can be blended and then projected onto a two-dimensional image plane for viewing.

One frequently used technique during rendering is ray-casting. There, a set of imaginary rays are cast through the array of voxels. The rays originate from some view point or image plane. Sample points are then defined along the ray. The voxel values are interpolated to determine sample values, and the sample values along each ray are combined to form pixel values.

U.S. Patent Application Sn. 09/315,742, *"Volume rendering integrated circuit,"* filed on May 20, 1999 by Burgess et al., incorporated herein by reference describes a rendering system that uses parallel pipelines. The rendering system includes a host processor connected to a volume graphics board (VGB) by a bus. The VGB includes a voxel memory and a pixel memory connected to a Volume Rendering Chip (VRC). The VRC includes all logic necessary for performing real-time interactive volume rendering operations. The VRC includes four interconnected rendering pipelines. In effect the VGB provides a rendering engine or "graphics accelerator."

During operation, application software executing in the host transfers volume data to the VGB for rendering. The application software also loads rendering registers accessible by the pipelines. These registers specify how the rendering is to be performed. After all data have been loaded, the application issues a command to initiate the rendering operation. When the rendering operation is complete, the output image is moved from the pixel memory to the host or to a 3D graphics card for display.

One problem with prior art hardware rendering pipelines is that frequently "bubbles" appear in the pipelines. Bubbles are due to the fact that data are not available on a given clock cycle. Once a bubble is introduced, it has to pass all the way through the pipeline. Consequently, bubbles waste time, and reduce the performance of the system.

Another problem with prior art hardware pipelines is that they typically process all voxels in a data set. It is well known that for a given visualization of volume data, that there are clusters of voxels that contribute useful information to the image and other clusters that are totally irrelevant. For example, in medical data sets, the percentage of voxels that do not contribute to the final image is typically in the range of 70-95%. Thus, eliminating unnecessary voxel/sample processing could eliminate up to 90% of the work.

Therefore, there is a need for a rendering system that can dynamically adapt to the complexities of the rendering data, and furthermore there is a need for a pipelined rendering system that does not process unnecessary data.

### Summary of the Invention

The invention provides a method and apparatus for rendering graphic data as an image. Graphic data that possibly contribute to the image is identified. The identified graphic data is read into a rendering pipeline. Samples are generated in the rendering pipeline only if they possibly contribute to the image for the identified graphic data. The identified graphic data and samples are processed in the rendering pipeline only as long as the identified graphic data and sample continue to contribute to the image. All other identified graphic data and samples are discarded from the pipeline.

### Brief Description of the Drawings

Figure 1 is a block diagram of a pipelined rendering system that uses a controller according to the invention;
Figure 2 is a block diagram of a rendering engine;
Figure 3 is a block diagram of stages of rendering pipelines;
Figure 4 is a block diagram of a controller connected to rendering pipelines;
Figure 5a-b are block diagrams of sample slices and voxel slabs;
Figures 6a-b are block diagrams of sample stamps and tiles;
Figures 7a-b, and 8 are block diagrams of rays passing through voxels;
Figure 9 is a block diagram of a controller according to the invention;
Figures 10-11 are block diagrams of controller state machines;
Figure 12 is a block diagram of instruction tags;
Figure 13 is a block diagram of stamp motion;
Figure 14 is a block diagram of section motion; and
Figure 15 is a block diagram of a controller execution unit.

### Detailed Description of the Preferred Embodiment

### Pipeline Organization

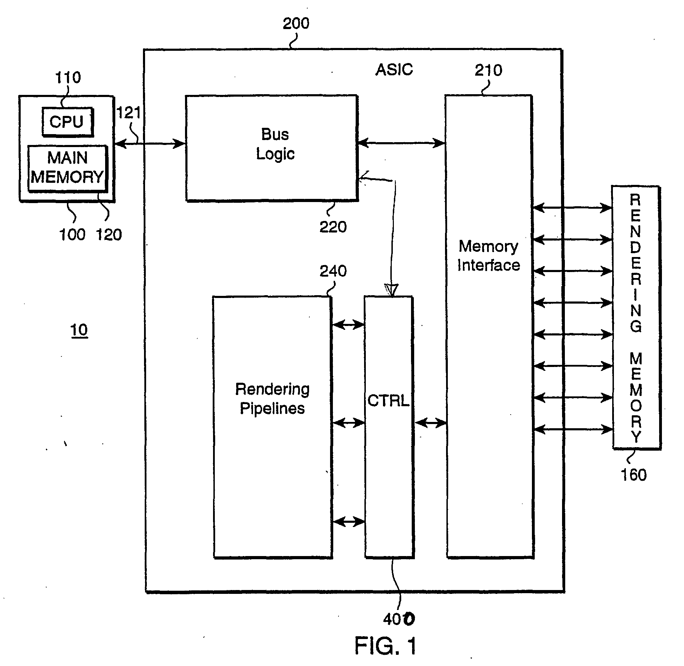

Figure 1 shows the overall organization of a volume rendering system 10 using a controller (CTRL) 400 according to our invention. The system includes a host computer 100 connected to rendering subsystem 200 by a bus 121. As an advantage, the rendering subsystem is fabricated as a single ASIC. The host includes a CPU 110 and a main memory 120.

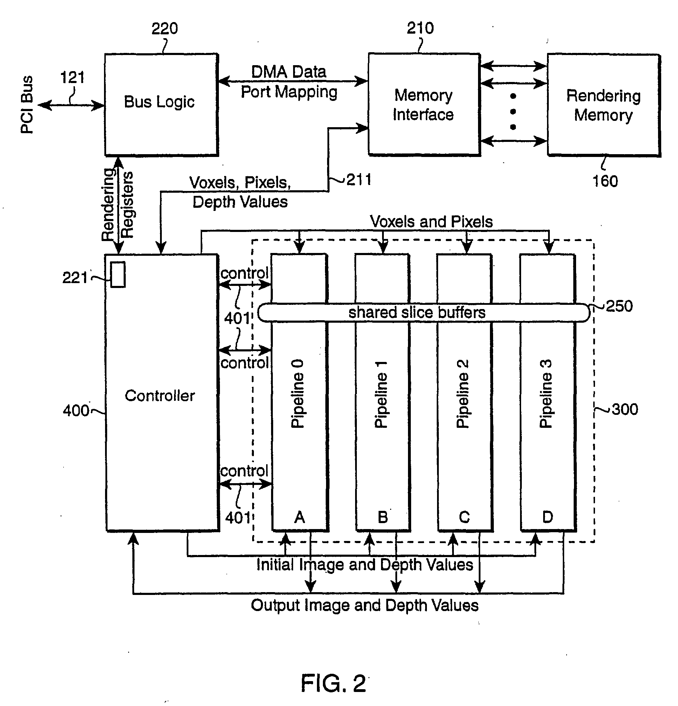

As also shown in Figure 2, the principal modules of the rendering subsystem 200 are a memory interface 210, bus logic 220, a controller 400, and four parallel hardware pipelines 300. Except for shared slice buffers 250, which span all four pipelines, the pipelines (A, B, C, and D) operate independent of each other. The. pipelines form the core of our rendering engine.

### Memory Interface

The memory interface 210 controls eight double data rate (DDR) synchronous DRAM channels that comprise an off-chip rendering memory 160. The rendering memory provides a unified storage for all data 211 needed for rendering volumes, i.e., voxels, pixels, depth values, look-up tables, and command queues. The memory interface 210 implements all accesses to the rendering memory 160, arbitrates the requests of the bus logic 220 and the controller 400, and distributes array data across the modules and the rendering memory 160 for high bandwidth access and operation.

### Bus Logic

The bus logic 220 provides an interface with the host computer system 100. If the host is a personel computer (PC) or workstation, then the bus can be a 64-bit, 66 MHz PCI bus 121 conforming to version 2.2 of the PCI specification. The bus logic also controls direct memory access (DMA) operation for transfering data to and from the rendering memory 160 via the memory interface 210. The DMA operations are burst-mode data transfers.

The bus logic also provides access to internal register files 221 of the controller 400. These accesses are direct reads and/or writes of individual registers initiated by the host computer 100 or by some other device on the PCI bus. The bus logic 220 also interprets access commands for efficient control of data transfers. The bus logic also sends register values directly to the controller 400 for controlling rendering operations and receives status back from the controller.

### Controller

The controller 400 controls the operation of the volume rendering engine 300 using control signals 401. Note, the controller is coupled to the pipelines in a parallel manner. The controller determines what data to fetch from the memory, dispatches that data to the four pipelines, sends control information, such as interpolation weights, to the individual pipeline stages at the right time, and receives output data and status from rendering operations.

A major function of the controller is to discard as much data as possible. By discarding data that are not needed rendering can be greatly accelerated.

The controller, in part, is implemented as a finite state machine controlled by a large number of registers. These are typically written by the bus logic 220 in response to load register commands of a command queue. Internally, the controller maintains the counters needed to step through sample space one section at a time, to convert sample coordinates to voxel coordinates, and to generate the control information needed by the stages of the pipelines. The controller 400 is described in greater detail below.

The controller is designed to operate, time-wise, well in advance of the pipelines 300. Thus, the controller can determine what samples and voxels are needed, and those that can be discarded. Recall, as many as 90% of the voxels in certain classes of volume data do not affect the resulting image. Not reading voxels saves memory bandwidth, and not processing samples saves pipeline cycles. In effect, the controller attempts to dynamically "prune" the volume data to a bare minimum.

Some samples and voxels may enter early stages of the pipeline, before this determination can be made. In that case, the samples and voxels are discarded in later stages, perhaps causing "bubbles." However, because the various stages of the pipeline are buffered and may operate at different rates, bubbles can sometimes be squeezed out to greatly decrease the amount of time it takes to render a volume. Because the peak rate at which the controller produces commands is faster than the pipelines can process commands, bubbles can be replaced with good data so that the performance of the pipelines is maximized.

As an additional feature, the controller can operate asynchronously with respect to the pipelines. This greatly simplifies the timing relationship. In fact, the pipelines can be though of as having variable lengths (in terms of cycles). For some operations the pipelines are (time-wise) shorter than for others. The controller is capable of time-aligning the control signals with the data even though the control signals are generated well in advance. Even though the controller does not know in advance how many clock cycles it will take for certain data to reach a particular stage in any of the pipelines. The signals are buffered so that they arrive at the stage when they are needed by the data.

### Pipelines, Miniblocks and Stamps

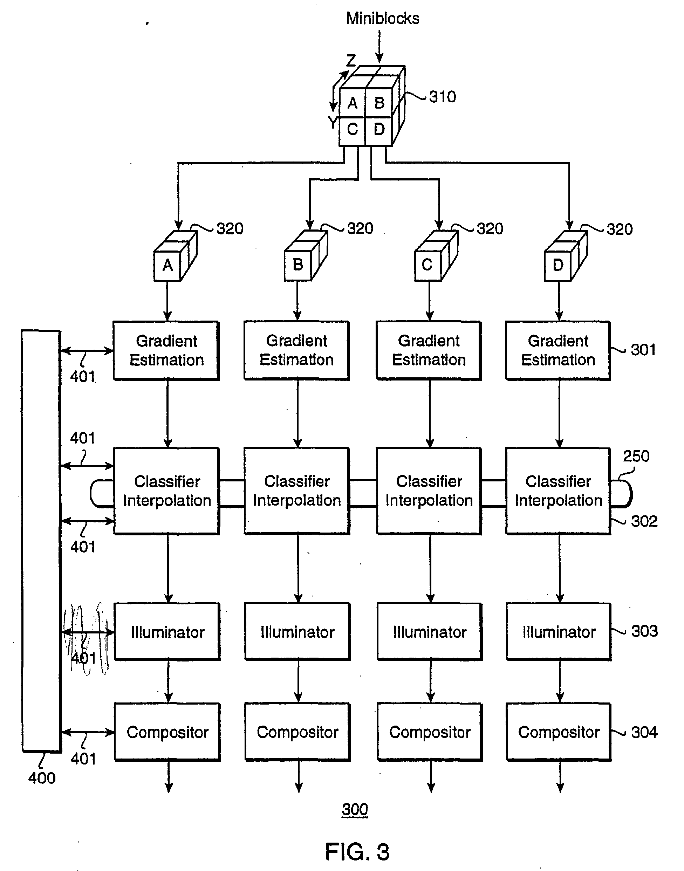

Figure 3 shows the four rendering pipelines of the rendering engine in greater detail, and it also shows how data and rendering operations are distributed among the piplines. Each pipeline includes a gradient estimation stage 301, a classifier-interpolator stage 302, an illuminator stage 303, and a compositor stage 304.

Voxels are stored in the rendering memory 160 as miniblocks 310, that is, small cubic arrays of *2×2×2* voxels each. During rendering, the controller 400 causes the memory interface to read streams of miniblocks. The miniblocks are presented to the pipelines at the rate of one miniblock per clock cycle. In actual fact, the mini-blocks are passed to the pipelines via the controller 400.

Miniblocks are read from the volume data set in *x-y-z*-order. That is, they are read sequentially in the *x*-direction to fill up a row of a section, and row-by-row in the *y*-direction to fill a slice, and slice-by-slice in the *z*-direction to render the entire section. Each miniblock is decomposed into four *1×1×2* arrays of voxels 320, that is, four pairs of voxels (A, B, C, and D) aligned in the *z*-direction. One pair 320 of voxels is forwarded to each pipeline as shown in Figure 3.

Each pair of voxels is passed through the gradient estimation stage 301 to obtain gradient values at each voxel. As a result of a central difference filter used to obtain gradients, the output voxels and gradients are offset by one unit in each dimension from the inputs. This requires a small amount of data exchange between pipelines.

From the gradient estimation stage, the voxels and gradients are passed to the classifier-interpolator 302. In this stage, voxel fields are converted to RGBα values and, along with gradients, are interpolated to values at sample points along rays. The interpolator first performs interpolation in the Z-direction, and then in the Y and X directions. The classification and interpolation steps can occur in either order. Note that the classifier-interpolator has one pair of slice buffers 250 that are shared among all four pipelines, as well as unshared buffers that store the voxel data used for Z interpolation.

The output of the four classifier-interpolators of the four pipelines is an array of RGBα values and gradients at a *2×2* array of points in sample space called a *stamp.* The points of a stamp always lie in a plane that is parallel to the voxel slab, at XY positions corresponding to the intersection of the slice with four of the rays being cast through the volume. When the rays are defined so as to pass through pixels on the image plane, we call it *xy-image order,* because the *x*- and *y*-coordinates of the rays are the same as those of image space. Ordinary image order, as known in the prior art, selects points in sample space on planes that are parallel to the image plane, rather than on planes that are parallel to the *xy* planes in the volume.

The stamp of RGBα values and gradients is next passed to the four illuminators 303. These apply the well known Phong lighting using reflectance maps. The illuminator of each pipeline is independent of those of the other pipelines, in the sense that they do not exchange data during rendering. The pipelines all operate synchronously according to the same clock.

The gradients are consumed in the illuminator stages, except when the rendering operation specifies the output of gradients. In this case, the three gradient components are substituted for the red, green, and blue color components in the pipelines.

The output of the illuminator stage of each pipeline is an illuminated RGBα value representing the color contribution of its sample point. The RGBα value is passed to the compositor stage 304. The compositor accumulates the RGBα values of the rays into an on-chip buffer. At the end of rendering a section, the outputs of the four compositor stages are read out, a stamp at a time, for storage in the rendering memory 160 as, for example, pixel values.

### Controller-Pipeline Interface

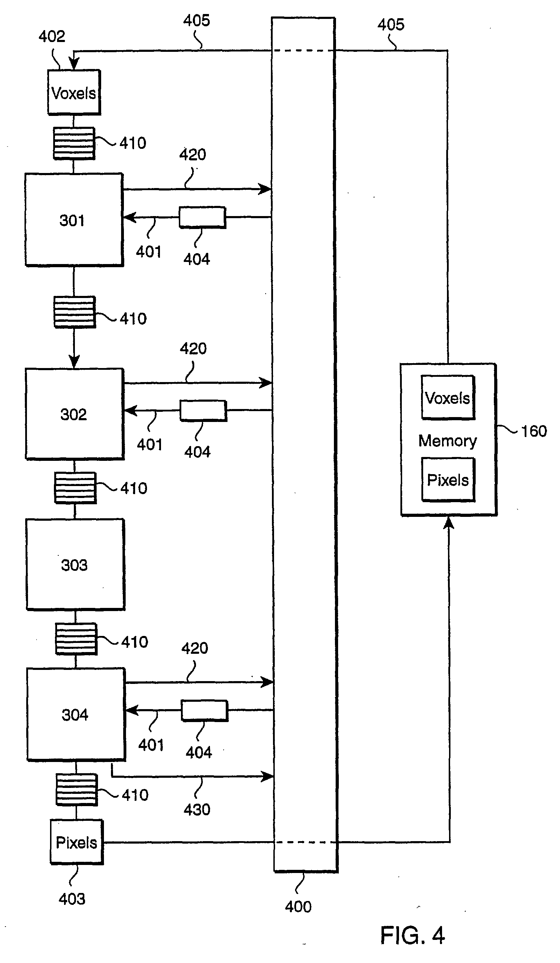

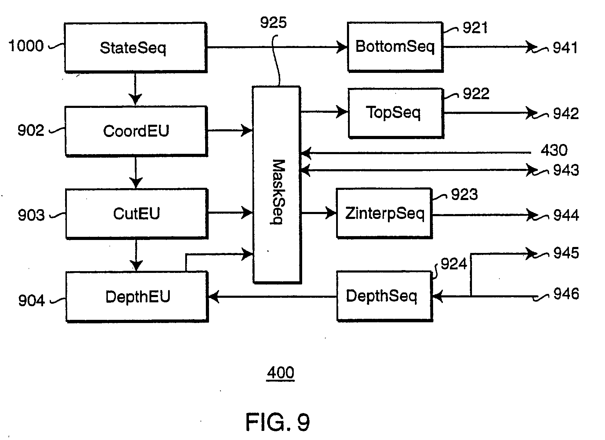

Figure 4 shows how the controller 400 is connected in parallel to the various stages 301-304 of the pipelines 300. For clarity, the interconnects between the controller and the pipeline are shown at an abstract level. The actual implementation includes a large number of parallel interconnect lines and more separate interconnects, see Figure 9 for a next level of detail.

The raw input data, e.g., voxels 402 from the rendering memory 160 pass through the controller 400 on the way into the pipelines 300 via bus 405. The stages 301-304 convert voxel values to sample values, and combine sample values to pixel values 403. The pixels are written back to the rendering memory via the controller.

In contrast with the prior art, the present rendering engine 300 is adaptively elastic. The controller 400 issues output control signals 401 to the pipelines 300. The output control signals are transferred to the pipelines via queues 404. These are first-in-first-out (FIFO) queues. The output control signals are used to control the operation of the pipeline stages 301-304. Input control signals 420 are received from the pipeline stages. The input control signals indicate when each corresponding queue 404 is about to become full, so that the controller should stop sending data.

The output control signals 401, individually or as sets, include *tags* described in greater detail below. The tags indicate the beginnings and ends of the various types of data structures into which the volume data are organized, such as sections, slices, and slabs, described in further detail below. The tags also mark types of data processed inside the controller, including stacks, tiles, stamps, etc., also described in further detail below.

The purpose of the tags in the queues 404 is to time-align the output control signals 401 with the data in the various stages of the pipelines. Buffers 410 provide elasticity in the pipeline. For clarity, the buffers 410 are shown between the stages, but in the preferred embodiment, some of the stages, such as the interpolator, have internal buffers. The buffers provide a place to store data when a next stage is not yet ready to accept the data. It is the buffers, in part, that give the pipelines a variable length or elasticity. The preferred implementation can save gates by eliminating the buffers between some of the stages, in particular stages where buffers do not help eliminate bubbles, e.g., between the classifier/ interpolator and the illumination stages.

During operation, depending on unknown dynamics of data availability, bus loads, and computation complexity, the various stages can process the data at different rates. Thus, if a down stream stage is still busy, then an upstream stage can continue to process and write its output to one of the buffers 410. Then, when the downstream stage completes the previous task, the input data that the downstream stage needs will be readily available.

The tags ensure that the data are always synchronized with respect to each other, even when the stages operate asynchronously with respect to each other, and with respect to the controller 400. Additional input control lines can be used to send pipeline status information back to the controller 400, such as input control lines 430 that indicate early ray termination in the compositor 304. Early ray termination is a operation known in the art for software rendering techniques whereby a ray is no longer processed after the accumulated color becomes opaque, so that further samples will not affect the result.

Prior art rendering pipelines, without the controller according to our invention, typically operate in a lock-step fashion, with all of the stages moving data forward simultaneously according to rigid clock cycles. Prior art pipelines typically do not buffer commands from a controller, so that the pipeline operates in lock step manner. Consequently, prior art pipelines, when stalled anywhere, inject "bubbles" into the pipeline that cannot be removed. Bubbles are useless cycles that degrade performance.

The elasticity of the present design that is responsive to dynamic processing conditions has the ability to "squeeze" bubbles out of the pipe because the various stages essentially process the data at different rates, independent of what other stages are doing. The effect is that the performance of the rendering engine is greatly increased. In addition, the controller can prune the volume, before and after voxel data enter the pipeline, to greatly speed-up the rendering process by as much as a factor of ten. Going from five to fifty frames per second, for example, makes real-time volume rendering a reality.

### Definition of Tems

This section introduces some basic terms used to describe the various data structures processed by our adaptive pipeline and controller. These are the data structures that are synchronized by the tags.

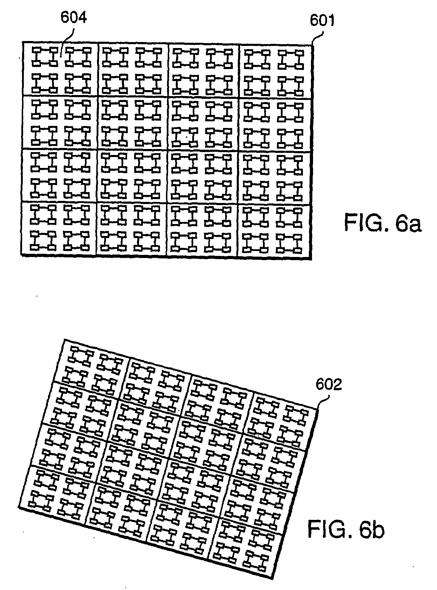

**Section:** A section is a rectangular region on the image plane that includes up to, e.g., 24x24 pixels. Alternately, a section can be thought of as a set of rays and all of the sample points along those rays. In the rendering engine 300, each section forms a parallelogram on XY voxel planes, see Figure 6 below. In the preferred embodiment, the section size is a multiple of four in each dimension.

**Slice:** A slice is a set of samples from a section that all have the same subvoxel Z address. A slice forms a rectangle when projected onto the image plane.

**Slab:** A slab is a rectangle of mini-blocks in the volume data set. A slab contains two planes of voxels that are aligned to each other and aligned to the mini-block boundaries. An N×M slab of mini-blocks contains 2x2Nx2M voxels.

**Stack:** A stack is a group of adjacent sample slices or mini-block slabs that are processed by the controller 400 as a group. The controller determines minimum and maximum values of the fractional voxel coordinates, Depth values (which are distinct from voxel Z coordinates), and cut plane values for a stack, in order to test whether the stack can be discarded. The controller tests multiple stacks in order to quickly skip over portions of a section.

**Tiles:** A tile is a portion of a slice or slab that is tested by the controller as a group. In a preferred embodiment, there are sixteen tiles per slice or slab. Each tile contains the same number of samples in the X and Y directions and the size of the tiles depends on the section size. Tile boundaries do not necessarily align with a stamp boundaries, because the tile size can be odd in either or both dimensions, e.g. for a 12x20 section each tile would be 3x5.

### Stacks and Tiles

The controller uses tiles and stacks to test and process large groups of samples and voxels. For example, the controller can determine that none of the samples or voxels in a tile or stack will contribute to the final image. In this case, the controller skips further processing on that tile or stack, which makes both the controller and the rendering pipeline more efficient. For example, if the controller skips a stack, then none of the voxels or samples in that stack are processed by the rendering engine 300.

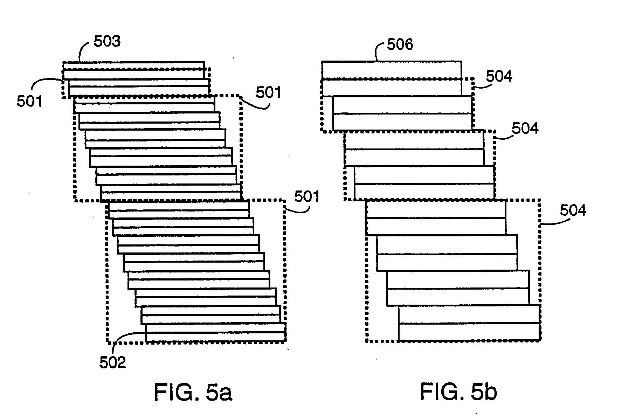

Figures 5a shows three stacks 501 of sample slices 502 in a ray aligned section underneath a topmost slice 503, and Figure 5b shows three stacks 504 of mini-block slabs 505 underneath a topmost slab 506. The slices or slabs are tested separately by the controller 400. The dotted lines illustrate the X and Z bounds of each stack. Note that the stacks need not be the same size. The controller can test stacks of varying sizes. In the preferred embodiment, the stack boundaries are offset from the current slice or stack by a power of two. This allows the controller to uses bit shifting, instead of multiplication, to produce the increment values necessary to skip over mutliple slices or stacks, as described below.

Dividing slices and slabs into a 4x4 array of tiles allows the controller and the rendering pipeline to skip over portions of sections. In particular, if an entire tile is outside a clip region, that tile need not be processed further. A sample slice tile contains a single sample from each ray. A slab tile contains the segment of each ray that uses voxels from that slab.

Figures 6a-b show respectively tiles projected onto the image plane 601 and tiles projected onto the voxel plane 602 for 16x16 sample slices. Each tile contains four stamps 604. Figure 6a shows that on the image plane, sections and tiles are orthogonal rectangles. Each tile contains a rectangular set of the same number of samples. A single stamp may cross tile boundaries. Figure 6b shows that on the voxel plane, the tiles form a parallelogram. In this Figure, the parallelogram has right angles, but it need not.

### Tile and Stack Ranges

The controller determines a set of ranges for each stack and tile. The ranges specify the minimum and maximum values that the stack or tile can have for parameters such as the XYZ position, the depth, or for various clipping planes.

Sample slice tiles are one sample thick. Because of this, the minimum and maximum bounds of the tile are the min/max bounds of the sample points in that slice that are within the tile. Voxel slab bounds are computed based on all of the samples that need to read those voxels, so the bounds must be determined for samples along a length of the ray. The minimum and maximum bounds for slab tiles need to reflect the total set of samples that use the voxels in the slab. Similarly, stacks include samples along the length of a ray, and so require minimum and maximum bounds that take account of a range of samples along each ray. Perspective makes the problem even more complicated, because ray separation may be different at the front face and back face of the ray segments that form the tile or stack.

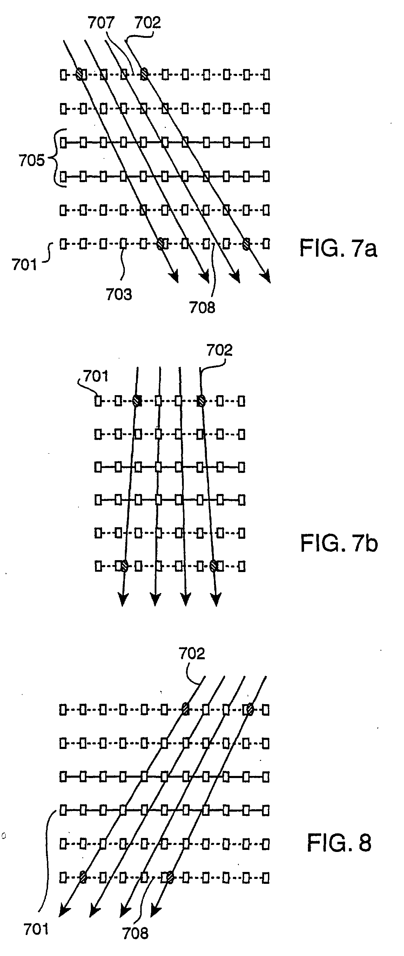

Figures 7a, 7b, and 8 show side views of voxel slices 701 that are intersected by rays 702 at various angles. These Figures define how to find the min/max bounds for slab tiles and stacks. Each small square 703 represents a voxel position. The mini-block slab contains the two central voxel slices 705, which are linked by solid lines. Samples within two voxels above or below the miniblock slab require voxels from the slab in order to compute central difference gradients, so samples up to two voxel slices away from the slab are included in each tile, as specified by the shaded boxes.

Each tile and stack has separate min/max ranges for the front and back faces of the tile or stack. The horizontal dotted lines 707-708 represent these ranges. The upper dotted lines 707 are the front face subvoxel X min/max ranges, and the lower dotted 708 lines are the back face min/max ranges. The subvoxel Z min/max for each face is the voxel slice marked by the dotted lines. These lines are horizontal because the preferred embodiment implements *xy* image order, as described previously. This same technique can be applied to full image order, in which case the dotted lines would be parallel to the image plane.

The controller reads voxels in the range *floor*(*min-1*) to *ceiling*(*max+1*) for the min and max X and Y addresses of the tile, or for the min and max X, Y, and Z addresses of a stack. This is necessary to determine gradients. Computing the gradient at a sample position requires computing a gradient at each of the voxels in the 2x2x2 region around the sample. This in turn requires reading the voxels adjacent to that 2x2x2 region. The preferred embodiment computes a central difference gradient, but the same technique allows computing more complex gradient functions, such as the 3x3x3 Sobel filter.

### Reducing the Number of Voxel to be Processed

As an advantage, our controller 400 selects which samples and voxels need to be processed, and which samples and voxels can be discarded. The following sections describes mask codes and other mechanisms used by the rendering engine according to the invention to reduce the number of voxels and samples that need to be processed.

In the prior art, hardware pipelines generally process all samples and voxels in a volume data set in order to produce a final image. The present rendering engine attempts to process only those sample that may make a contribution to the final image. Samples and voxels that do not contribute to the final image are discarded.

A number of techniques are used to minimize the number of voxels and samples that need to be processed and maximize the number of voxels and samples to be discarded. Early ray termination discards voxels along a ray when the ray is fully saturated, or almost fully saturated, that is, when processing any additional voxels along the ray will not change the final appearance of the corresponding pixel, or will change it minimally. Other techniques, such as clipping or detecting empty space, can also discard voxels that are outside the field of view. The controller discards data by using mask codes.

### Mask Code

A mask code is a two-bit code that specifies how the position of a sample on a ray relates to a clipping region. A clipping region is used to define a portion of the volume data set to be rendered. Portions of the volume outside the clipping region are not rendered. As an advantage, voxels and samples in such regions are not processed by the rendering engine. Clipping regions are defined by clipping planes.

A sample is *valid* when it is within the clipping region. Otherwise, a sample is *before* or *after* a convex clipping region, relative to the ray direction. With non-convex clipping regions, it is possible that the sample cannot be identified as either before or after, in which the sample is *outside,* see below for details. A sample that is *before*, *after,* or *outside,* the clip region is *invalid.*

The controller 400 is able to produce either eight individual sample positions for each clock cycle or four min/max position pairs per clock cycle, each with its own mask code for each of a variety of clipping regions.

### Mask Code Interpretations

Table A shows four cases represented by each 2-bit mask code. "Valid" indicates a sample position that is within a clipping region and so should be processed. The other cases indicate sample positions that are invalid, and these can be discarded either before entering the pipeline, or at some point in the pipeline prior to the compositing stage 304. As an advantage, discarding voxels from the pipeline improves performance. It should be noticed that there are other conditions, such as early ray termination, that can also affect the mask codes and cause voxels to be discarded.

**Table A**

| Code | Mask Interpretations |
|---|---|
| 00 | Valid: the sample position is within the test range. |
| 01 | Outside: the sample is invalid, but cannot be specified as Before or After (only used for crop planes and cut planes). |
| 10 | Before: the sample is invalid and all previous samples on the same ray are also invalid. |
| 11 | After: the sample is invalid and all subsequent samples on the same ray are also invalid. |

"Before" and "After" specify whether an invalid sample position on a ray occurs before that ray enters the clipping region or after the ray leaves the clipping region. This can always be determined for convex clipping regions. The trim planes clip against min and max bounds in each dimension, and therefore produce a convex clipping region. The cut planes clip samples that are either outside of or between a pair of parallel planes, so the cut planes produce a convex clipping region in the former case. The "Outside" code specifies an invalid sample that cannot be determined to be either before or after the clipping region. This occurs with cut planes when they clip out the region between the parallel cut planes.

### Combining Dependent Mask Codes

Slice and slab state machines, described below, test ranges represented by minimum and maximum subvoxel addresses, sometimes for separate front and back faces. In this case, two to four 2-bit mask codes can be combined. Four 2-bit masks are needed for stacks and for voxel tiles, to represent min/max pairs for both the top and bottom of the tile or stack. Sample tiles only need a single min/max pair, because they are just one slice thick. These are called dependent mask codes, since the two mask codes represent different parts of the same clip region.

Table C shows how to combine dependent mask codes. If both mask codes have the same value, then the result is the same. If one mask code is *valid,* then the combination is also *valid.* That is because the two mask codes represent min and max positions: if one of the mask codes is in the clip region, then their combination is at least partially within the clip region, too. If one maks code is *Before* and the other mask code is *After*, the combined result is also *Valid,* because this represents the case of a tile or stack that extends across the clip region. The combinations in parentheses do not occur in the preferred embodiment, because convex clip regions do not use *Outside* and non-convex clip regions do not use *Before* and *After.*

**Table C**

| **Dependent** | *Valid* | *Outside* | *Before* | *After* |
|---|---|---|---|---|
| *Valid* | Valid | Valid | Valid | Valid |
| *Outside* | Valid | Outside | (Valid) | (Valid) |
| *Before* | Valid | (Valid) | Before | Valid |
| *After* | Valid | (Valid) | Valid | After |

### Combining Independent Mask Pairs

The Table D below shows how to combine two 2-bit mask codes for independent clipping conditions, that is, mask codes that represent separate clip tests. For example, one of the mask codes can indicate cut plane clipping and another mask code can indicate one of the X, Y, or Z trim planes.

Because a sample is only valid when it satisfies all of the clipping conditions, the combined result is only Valid when both of the independent clipping conditions are Valid. Furthermore, if any of the clipping conditions are After, then the result is After, which means that this sample position, tile, or stack is past one of the clipping regions and therefore processing along its ray or rays is complete.

**Table D**

| **Independent** | *Valid* | *Outside* | *Before* | *After* |
|---|---|---|---|---|
| *Valid* | Valid | Outside | Before | After |
| *Outside* | Outside | Outside | Before | After |
| *Before* | Before | Before | Before | After |
| *After* | After | After | After | After |

It should be noted that the cut planes, the trim planes, the crop mask, and the depth mask are all independent of each other.

The following section describes how the rendering engine performs depth clipping, which is another technique to reduce the number of voxels to be processed.

### Depth Clipping

Clipping against depth buffers is somewhat different from the other clip tests. In the prior art, depth tests are typically performed by comparing the depth of the sample against a single depth value per ray/pixel, with one of the eight different inequality comparisons selected (<, >, =, <=, >=, !=, *always,* or *never)* to determine if the sample is clipped. Our controller 400 has two differences from what is known.

First, the controller 400 performs two depth tests and combines the results of the two tests through a selectable boolean operation: AND, OR, or XOR. Because the two comparison tests can be complemented (e.g., the complement of < is >=) or replaced with *always passes* or *never passes*, DeMorgan's Law may be used to produce all sixteen boolean combinations of the two tests.

Second, the controller 400 performs only part of the clipping operation. In the preferred embodiment, the controller 400 compares stacks, tiles, and samples against the minimum and maximum value of the two depth buffers within the section. The per-sample depth tests are performed in the compositor 304, because the compositor supports operations that modify the depth buffer. An alternate embodiment performs all of the depth testing within the controller, provided that modified depth values are communicated from the compositor to the controller, as necessary.

Depth testing requires a different process than the other clip regions. The other clip tests each have just two possible results for each sample comparison: either the sample is on one side of the clip boundary or it is not. Depth tests have three possible results, because the sample can also fall exactly on the clip boundary. This is why there are 2³=8 possible comparison tests per depth buffer: *never, <, =,* ≤, >, ≥, ≠, and *always*.

The rendering system uses two depth buffers called *DepthFirst* and *DepthLast*. The names suggest their typical use, i.e., specifying the start and end of a region to render from the volume. However, there is no requirement that DepthFirst precede DepthLast. Accordingly, there are actually six different combinations of test results for a single sample when compared against the two depth buffers at a single position, depending on whether the sample depth is less than or not less than each of the two depth buffers, or whether the sample is on the clip boundary for one or both.

In the preferred embodiment, the controller 400 does not discard voxels or samples for depth tests that use = or ≠ comparisons. Instead, the controller always reports stacks and tiles as being valid when either of these comparisons is enabled, leaving all discarding to occur in the compositor 304. Also, the controller translates comparisons A≤B and A>B into A<B+1 and A≥B+1 comparisons by using the carry bit of a comparator. This way, the controller clip logic need only consider two comparison results per depth buffer: DepthSample < DepthBuffer and DepthSample ≥ DepthBuffer.

Because tiles and stacks have a range of sample depths, and because the depth buffers themselves have a range of values, each tile or stack actually needs a 4-bit range code, to indicate which of the four depth comparison results are possible within that tile or stack. When comparing a single sample position against one value from each depth buffer, a value of 1 indicates DepthSample < both, the value 2 indicates DepthSample < DepthFirst but ≥ DepthLast, the value 4 indicates DepthSample ≥ DepthFirst but < DepthLast, and the value 8 indicates DepthSample ≥ both.

### Combining Depth Tests into Range Codes

The controller 400 produces a 4-bit range code by combining individual depth tests of each sample position against both the min and max of the two depth ranges. Table E below shows how to combine a depth test result into a range code. There are ten legal range codes, counting the null range (0000). A code such as 1110 is illegal, for example, because it would assert that sample positions can be less than DepthFirst or less than DepthLast, without ever being less than both of them at the same time. Such codes are therefore not generated and do not appear in Table E below. A method for generating the table values is to compute R = (A OR B), then output R=1111 if R==x11x or 1xx1, else output R.

**Table E**

| **Code** | **0000** | **0001** | **0010** | **0011** | **0100** | **0101** | **1000** | **1010** | **1100** | **1111** |
|---|---|---|---|---|---|---|---|---|---|---|
| **0001** | 0001 | 0001 | 0011 | 0011 | 0101 | 0101 | 1111 | 1111 | 1111 | 1111 |
| **0010** | 0010 | 0011 | 0010 | 0011 | 1111 | 1111 | 1010 | 1010 | 1111 | 1111 |
| **0100** | 0100 | 0101 | 1111 | 1111 | 0100 | 0101 | 1100 | 1111 | 1100 | 1111 |
| **1000** | 1000 | 1111 | 1010 | 1111 | 1100 | 1111 | 1000 | 1010 | 1100 | 1111 |

The controller also needs a second set of range codes, which the controller uses to generate *After* mask codes. The *After* mask codes are produced from Range codes by generating a new range code that combines the old range code and 1010. This makes the range code extend past both DepthFirst and DepthLast. The After range code may be used to determine when the sample stack, or tile is after the depth clip region, so that processing can be terminated.

The depth test performed in the compositor also has a 4-bit code, to indicate which of the four combinations of depth tests produce valid samples. Table F below shows the codes resulting from the possible depth tests and the ways to combine them. If the depth comparison is = or ≠, or if the codes are combined with an "alwaysPass" code, then the 2-bit Mask code for depth clipping is Valid. Otherwise, the mask code is Valid if the AND of the range code and the code from the table below is non-zero.

**Table F**

| | *FirstANDlast* | | | | *FirstORlast* | | | | *firstXORlast* | | | |
|---|---|---|---|---|---|---|---|---|---|---|---|---|
| | never | <, ≤ | ≥, > | always | never | <, ≤ | ≥, > | always | never | <, ≤ | ≥, > | always |
| never | 0000 | 0000 | 0000 | 0000 | 0000 | 0101 | 1010 | 1111 | 0000 | 0101 | 1010 | 1111 |
| <, ≤ | 0000 | 0001 | 0010 | 0011 | 0011 | 0111 | 1011 | 1111 | 0011 | 0110 | 1001 | 1100 |
| ≥, > | 0000 | 0100 | 1000 | 1100 | 1100 | 1101 | 1110 | 1111 | 1100 | 1001 | 0110 | 0011 |
| always | 0000 | 0101 | 1010 | 1111 | 1111 | 1111 | 1111 | 1111 | 1111 | 1010 | 0101 | 0000 |

If the mask code is invalid, then it is necessary to distinguish whether it is After or Outside. To determine this, combine a depth comparison result of 1000 with the range code, then AND that result with the 4-bit code from the table above. If the ANDed result is zero, then the mask code is After, else it is Outside. This works because it tests whether sample depths from the current position through the largest possible depth values will also fail the depth test.

### Controller

Figure 9 is a top-level block diagram of the controller 400 according to the invention. The controller includes a master state machine (StateSeq) 1000, execution units CoordEU 902, CutEU 903, DepthEU 904, and logic elements BottomSeq 921, TopSeq 922, ZinterpSeq 923, DepthSeq 924, and MaskSeq 925. The execution units (EU) 902-904) are described later.

BottomSeq 921 issues read and write requests to transfer image and depth data between the compositor stage 304 and the rendering memory 160. It also tests for reads to out-of-bounds addresses, based on a programmed range, and replaces the out-of-bounds addresses with a predeteremined constant value.

DepthSeq 924 accumulates depth values for the depth buffer used by the compositor stage 304. DepthSeq also determines the minimum and maximum depth values for each section. An alternative embodiment can produce a separate min/max depth value for each of the sixteen tiles in a section.

MaskSeq 925 computes mask codes, based on data passed to it from the controller EUs 902-904. The other two logic elements (TopSeq 922 and ZinterpSeq 923) are described below.

The controller 400 uses the following major data buses: a bus 941 from BottomSeq 921 to the memory interface 210, a bus 942 from TopSeq 922 to the memory interface 210, a bus 943 between the MaskSeq 925 and the interpolation 302 and compositor 304 stages, a bus 944 from ZinterpSeq 923 to the Z-interpolator of the interpolation stage 302, a bus 945 from DepthSeq 924 to the compositor stage 304, the bus 430 from the compositor stage to MaskSeq 925 (see Figure 4), and a bus 946 from the memory interface 160 to DepthSeq 924.

In the following, it should be undertood that that when it is stated that the controller "passes" or "sends" large data structures, such as stacks, slabs, slices, etc., to the various controller components, what is meant is that coordinate addresses are passed around. Voxels and pixels, however, do enter and exit the pipline via the controller via the bus 405 as shown in Figure 4.

During each clock cycle, StateSeq 1000 issues one instruction to each of the execution units CoordEU 902, CutEU 903, and DepthEU 904. The execution units are identical in construction but operate in parallel on different data (with different bit widths) using a SIMD type of architecture. The master state machine 1000 also arbitrates between multiple individual threads executing on the execution units 902-904. The threads are implemented as four co-routines that step through the volume data set at different levels of detail, as described below.

The three execution units CoordEU 902, CutEU 903, and DepthEU 904, each determine data at eight sample positions in parallel using the same instruction issued by the master state machine 1000. All of the threads execute in turn on the same set of hardware logic elements. This eliminates a large amount of global routing that would otherwise be required to pass data from one state machine to the next. Instead, most data are passed from one thread to the next through register files 1501 within the execution units, as described below.

### Master State Machine

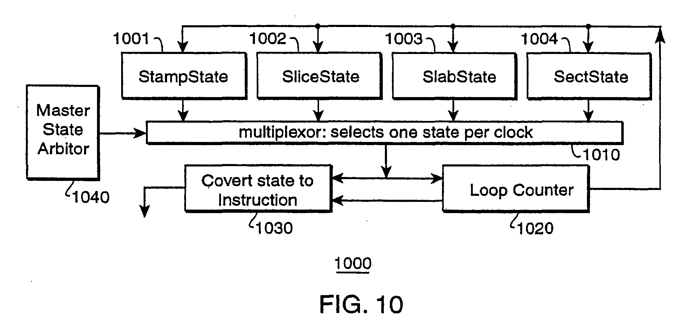

Figure 10 shows the master state machine (StateSeq) 1000 in greater detail. StateSeq includes four ray casting threads or state machines, StampState 1001, SliceState 1002, SlabState 1002, and SectState 1004. The master state machine schedules one of these threads to execute on the execution units (EUs 902-904) every clock cycle using a multiplexor 1010 and a master state arbitor 1040. The scheduled state machine is the one with the highest priority that is ready to execute. To be ready, the state machine must have data to process and room in its output buffer to report results.

The manner in which priorities are assigned to the state machine 1001-1004 may depend on an actual implementation. For example, if it is necessary to prioritize on a basis of the amount of data to proces, then StampState 1001 should have the highest priority. However, if the goal is to advance the state machine with the longest latency, then SlabState should be prioritized. The preferred implementation gives SlabState the highest priority.

A loop counter 1020 controls stepping through the individual sections, slabs/slices within a section, or stamps within a slice. The loop counter also determines the ray positions within sections. An instruction generator 1030 converts a current state to an instruction at a rate of one instruction per clock cycle. The instruction is issued to each of the execution units 902-904.

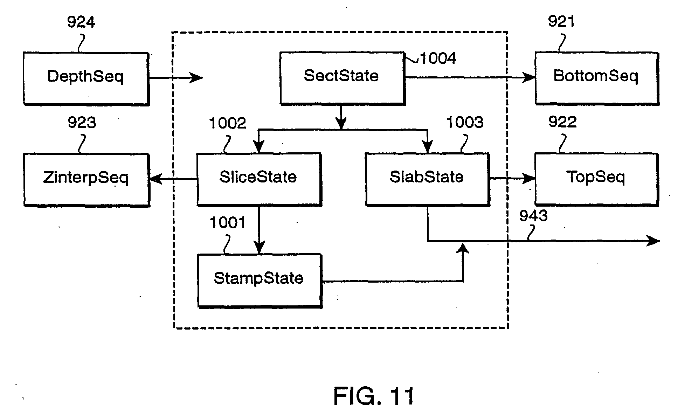

Figure 11, described further below, illustrates the relationship that the four state machines 1001-1004 have to each other, and the other controller logic elements and bus interfaces to which they each send data. Both StampState 1001 and SectState 1004 step through 2D arrays in the X and Y dimensions, while SliceState 1002 and SlabState 1003 step through 1D arrays in the Z dimension.

It should be noted that the controller 400 according to the invention can produce data at a higher rate that the rendering engine can consume the data. This is intentional. Thus, when "bubbles" appear in the pipelines, the extra data can be used to "squeeze" out the bubbles.

### Stamp State Machine

StampState 1001 processes stamps of samples within a sample slice. On a single clock cycle, StampState 1001 can produce two samples per pipeline, or two aligned 2x2 stamps of samples over the four pipelines. StampState issues samples to the XY interpolation queues. StampState can execute when the XY interpolation queues are not full and SliceState has found a sample slice.

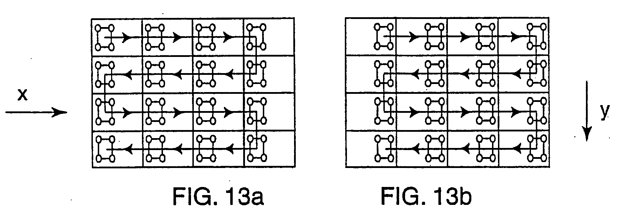

StampState 1001 also controls stamp movement, see Figure 13a-b. StampState produces two stamps per clock, moving in a serpentine pattern across the section as shown in Figure 13. The stamp state machine 1001 passes stamp data to the interpolation stage 203 and the compositor via bus 943.

### Slice State Machine

SliceState 1003 processes sample slices within a section. SliceState tests each sample slice to determine whether the slice can be discarded. If not, SliceState passes the slice to StampState 1001 and to ZinterpSeq 923. SliceState can skip over stacks of slices, when all of slices in the stack are discarded, as described below.

SliceState 1002 determines slices for ZinterpSeq 923 whenever the slice cannot be completely discarded. SliceState also determines the XY bounds of all slice stacks and tiles, with a mask code that indicates which tiles and stacks are to be discarded.

The slice state machine 1002 passes data to the stamp state machine 1001. The slice state machine 1002 also passes sample slice data to ZinterpSeq 923, which generates Z interpolation data for the interpolator stage 302.

ZinterpSeq 923 receives tile bounds from the CoordEU logic element 902 each time SliceState finds a sample slice to process. ZinterpSeq 923 tests each XY voxel position to determine whether the voxel is in an undiscarded tile and sets the valid bits of the corresponding mask accordingly. This allows ZinterpSeq to discard voxels that do not need to be interpolated. For valid voxels, ZinterpSeq sends Z interpolation data to the interpolation stage 302, together with the mask bits.

SliceState can execute when three events are true: the ZinterpSeq input queue is not full, StampState 1001 has started processing the most recent slice it found, and SectState 1004 has found a section to process. Additionally, SlabState 1003 must either be done with the current section or must be ahead of SliceState 1002. As a result, SliceState can skip over invalid slices while StampState and ZinterpEU are processing the most recent slice, in order to find another valid slice by the time StampState is ready for it.

### Slab State Machine

SlabState 1003 processes mini-block slabs within a section. SlabState tests each slab to determine whether the slab can be discarded. If not, SlabState passes the slab to TopSeq 922 of Figure 9. TopSeq issues voxel read requests to the memory interface 210 over bus 942. TopSeq also passes the slab address to the slab interface of the interpolation stage 302 of Figure 3. SlabState can also skip over stacks of slabs, when all of the slabs are discarded.

SlabState 1003 passes slab address data the interpolation stage 302 via bus 943 and to TopSeq 922, which reads voxels that enter the rendering pipeline 300. TopSeq 922 receives tile bounds from the CoordEU 902 each time SlabState 1003 finds a mini-block slab to process.

TopSeq 922 then passes two mini-blocks read requests to the memory interface 210 per clock cycle, as well as putting XY addresses and related information into an input queue for the gradient estimation stage 301. TopSeq also generates mask bits that control whether the mini-block read instructions and XY addresses are issued.

SlabState can execute when the TopSeq and Slab input queues are not full and SectState has found a section to process. As a result, SlabState can skip over invalid slabs while TopSeq is processing the most recent slab, in order to find another valid slab by the time TopSeq is ready for it. Also, SlabState generally runs well in advance of SliceState, since there are buffers in the gradient estimator 301 that need to be filled before the interpolator 302 can start. This is another way that the controller provides elasticity: different state machines run based on when their data is required in the rendering pipelines 300.

### Section State Machine

SectState 1004 processes sections. Sections are rectangular in sample space but are parallelograms in voxel space. SectState tests each section to see whether the section intersects the view frustum. If the section does intersect, then SectState passes the section to BottomSeq 921. BottemSeq initializes depth buffers of the compositor stage 304, and also passes the section to SlabState 1003 and SliceState 1002. SectState can execute when rendering is started, the BottomSeq queue is not full, and SlabState and SliceState have started processing the most recent section found.

The section state machine 1004 passes data to the slice state machine 1002 and the slab state machines 1003. Additionally, the section state machine passes section data to BottomSeq 921, which reads and writes buffers of the compositor 304 for each section.

### Commands and Instructions

The master state machine 1000 operates the controller 400 by issuing instructions and commands based on the states processed by the four state machines 1001-1004. Commands acquire data from the bus logic 220 and load registers inside the controller. Instructions cause the execution units of the controller to perform arithmetic operations on values in their associated register files and send the results of the arithmetic operations to other controller elements. Instructions include a *"tag."* The tag is used by the other logic elements 921-924 to interpret the data generated by the execution units. The tag is also used to synchronize the controller with various data structures that flow through the pipelines 300, as described above.

The tag is used in several ways. First, each of the controller's EUs 902-904 can use the tag internally to determine how to compute mask bits. Several clock cycles later, the logic elements 921-925 may use the tag to determine how to use results produced by the execution units. In other words, the tag field is used to synchronize the operation of the controller with the data structures flowing through the pipelines.

### Controller Raycasting

This section describes ray casting in greater detail. Each section below describes one of the four state machines responsible for ray casting: StampState 1001, SliceState 1002, SlabState 1003, and SectState 1004. Each of these state machines issues instructions that specify the operation to be performed during a clock cycle. The execution units 902-904 pass the tags of the instructions along with the result data to the logic elements 921-925.

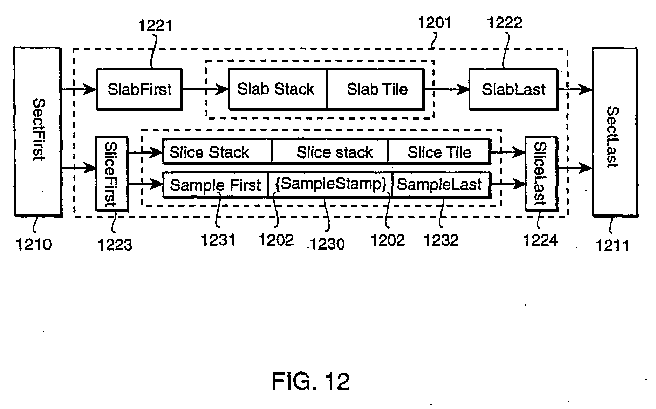

Figure 12, in a general manner, shows the instruction tags that specify data or sequencing, in the order that they are produced. Dotted lines 1201 and braces 1202 indicate sequences that can be repeated. The "First" and "Last" designation allow for synchronization either before or after the controller starts processing the slabs or slices of a section, or the stamps of a slice.

Rendering begins with a SectFirst tag 1210 and ends with a SectLast tag 1211. Between these two tags, there are sequences of per-section tags, depending on the number of sections being rendered. Slab processing within each section begins with a SlabFirst tag 1221 and ends with a SlabLast tag 1222. Slice processing within each section occurs in parallel with slab processing, and starts with a SliceFirst tag 1223 and ends with a SliceLast tag 1224. Processing of sample stamps 1230 within each slice begins with a SampleFirst tag 1231 and end with a SampleLast tag 1232. Individual sample stamps are marked with a SampleStamp tag 1230.

### Stamp State Machine

On each clock cycle, StampState 1001 steps to two new samples per pipeline, which form two 2x2 stamps within a row. StampState determines *xyz* voxel coordinates, cut plane parameters, and depths. StampState tests these samples against the crop limits, trim limits, cut planes, depth min/max, and other masking functions, to determine whether to discard samples.

### Stamp Motion

Figures 13a-b show how the controller 400 steps through the stamps of a sample slice. During each clock cycle, two stamps are produced. The stamp state machine 1001 implements a serpentine scan, moving to the right across the first row, to the left across the second row, etc. Each *x*-direction step moves two stamps horizontally, and each *y*-direction step moves one stamp vertically.

### Slice State Machine

Recall that a slice is a set of samples from a section that all have the same Z address. SliceState 1002 steps through sample slices within a section, skipping individual slices or stacks of N slices when the slices can be discarded. If a slice cannot be discarded, SliceState issues it to StampState 1001.

After the controller has found a section that needs to be rendered, the controller steps through the sample slices in that section, checking the current slice 503 and following stacks of slices 501, as shown in Figure 5a. Figure 5a shows slices within a section. The dotted lines show stacks 504 of slices underneath the current slice 506. Based on the pruning tests, SliceState advances 1, 4, 16, 32, or 64 slices after processing the current sample slice. If the current slice cannot be discarded, then SliceState 1002 generates signals for ZinterpSeq 923 and StampState 1001. ZinterpSeq produces Z interpolation instructions for the interpolation stage 302, and StampState generates XY interpolation instructions.

To process a slice, bounds of tiles are determined, as well as a current position and its XY increments, for use by StampState 1001. In an orthographic projection, the increments are all constant through the section. In a perspective projection, the Z increments are constant, but the X and Y increments change by a fixed amount for each slice down the section.

### Slab State Machine

SlabState 1003 steps through mini-block slabs within a section, skipping individual slabs or blocks of N slabs when the slabs can be discarded. If a slab cannot be discarded, SlabState generates the necessary commands to read the slab's voxels from rendering memory 160 into the rendering engine 300.

### Slab Motion

After the controller 400 has found a section that needs to be rendered, the controller steps through the mini-block slabs in that section, checking the current slab 506 and the following stacks of slabs 504, as shown in Figures 5b. Figure 5b shows mini-block slabs within a section. The dotted lines show stacks 504 underneath the current slab 506. Based on pruning tests, SlabState 1003 advances 1, 4, 8, 16, or 32 slabs after processing the current slab 506. This corresponds to 2, 8, 16, 32, or 64 voxel slices as shown in Figure 5a. If the current slab 506 cannot be discarded, then SlabState 1003 notifies TopSeq 922 so that the slab's voxels can be read into the pipelines.

### Section State Machine

Recall, a section is a rectangular region in the image plane that includes up to, e.g., 24x24 pixels. SectState 1004 steps to a next section in the image plane. SectState issues each section to SlabState and SliceState if it contains any valid samples. BottomSeq reads and writes depth and image buffers for each section, whether or not it contains valid samples.

### Section Motion

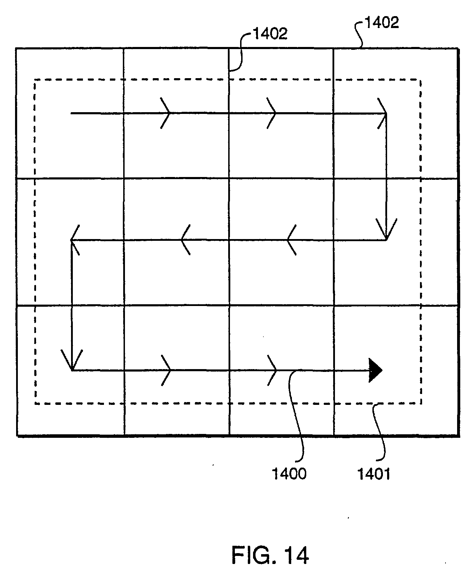

Figure 14 illustrates section motion 1400. The dotted lines mark the view frustum and the solid lines 1402 mark the sections. Each section is between 4 and 24 samples wide in each dimension. The section therefore contains from two to sixteen stamps in each dimension, divided evenly among a 4x4 array of tiles.

Section motion across the image plane is similar to stamp motion across a sample slice. Both use serpentine scanning, moving to the right and left in the X dimension, and moving to increasing Y values. The difference is that StampState 1001 determines eight sample positions per state, and SectState 1004 determines a single section per state.

With orthographic projection, all increments remain constant while stepping across the image plane. Under perspective projection, the X and Y increments remain constant, but the Z increments change by a fixed amount for each step in X or Y.

SectState 1004 processes sections on the base plane. SectStart checks the first section. If the section does not intersect the view frustum 1401, then SectState steps until it finds the first section. Otherwise, SectState enables SlabState 1003 and SliceState 1002 to step through the section. SectState also issues the section to BottomSeq 921, which initializes a variety of buffers. BottomSeq reads the necessary depth and image buffers and sends their data to the compositor 304. At the same time, BottomSeq tests each pixel against the view frustum to initialize a 24x24 bit mask. Each bit indicates whether a corresponding ray is still active. After the compositor 304 signals that it has completed a section, BottomSeq writes data back to the memory 160, as required, only modifying the pixels that are within the view frustum.

### Controller Execution Units

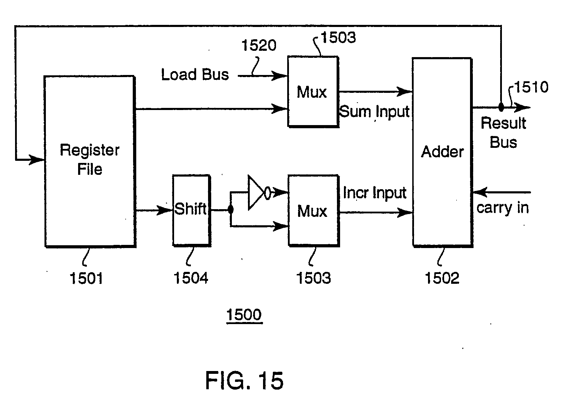

The controller state machine 400 directly controls the CoordEU 902, CutEU 903, and DepthEU 904. Each of these contains multiple copies of a basic arithmetic logic unit that is illustrated in Figure 15. The CoordEU actually contains six copies in order to compute X, Y, and Z coordinates. The CutEU contains eight copies, in order to compute four cut planes. The DepthEU contains two copies in order to compute depth values. In each case there are twice the expected number of EUs because the controller 400 computes a pair of stamps in the StampState 1001 state machine, and computes both a min and a max value for the other three state machines.

As shown in Figure 15, execution units 902-904 of the controller 400 execute microcode in multiple SIMD copies of an execution unit 1500. The EU 1500 includes a three port register file 1501, an adder 1502, two multiplexors 1503, and a shifter 1504. The EU can either add or subtract two registers from the three port register file 1501. Furthermore, one of the EU inputs can be shifted left up to six bits to multiply the register value by a power of two, up to 64. This is useful for skipping over stacks of slabs or slices. The EU result 1510 can be written back to one of the registers. Alternately, a register can be loaded from a load bus 1520, which is used by the Section state machine state for initialization.

One of the register file entries is optimized to allow it to be updated on each clock cycle. This register contains the value that is incremented by the stamp state machine while stepping across the slice. The other register file entries require a three instruction delay from the instruction that writes to them and the next instruction that reads them. This allows an inexpensive register array implementation in the preferred embodiment.

Each of the EUs actually needs to generate four different values. That is because each stamp contains four samples and each stack or tile operation also produces four stack or tile min/max values. One possible implementation uses four times as many EUs in the CoordEU, CutEU, and DepthEU. Instead, the preferred embodiment uses four dedicated adders and a small number of dedicated registers to produce four related values for each value produced by the adder. The operation performed by this logic is selected by the tag attached to the instruction. A tag for a stack operation increments a Z address by multiples of the step size in Z. A tag for a stamp or tile operation increments an X or Y address to produce four positions in a 2x2 array.

### Mask Sequencer

MaskSeq 925 combines mask information in order to determine when to discard samples, tiles, slices, and slabs. MaskSeq maintains one valid bit for each ray. MaskSeq initializes a ray as valid when it intersects the view frustum, using view frustum comparisons performed by BottomSeq 921. Any positions outside the view frustum start out as invalid. MaskSeq marks a valid ray as invalid when all subsequent samples along that ray are guaranteed to be invalid. This occurs in two different ways. First, a sample stamp clip test inside the controller can produce an After mask code, indicating that the sample's ray is past one of the clip regions. Second, ray termination results returned from the compositor stage 304 via line 430 can set a ray as invalid. A tile is marked invalid when all rays in the tile are invalid. Section processing is complete for slices and slabs when all 16 tiles are invalid.

Terminate signals received from the compositor stage 304 mark terminated rays as invalid. In parallel, StampState 1001 can mark rays as invalid, or SliceState 1002 can mark entire tiles invalid.

Most important, MaskSeq consolidates mask bits from the three controller execution units 902-904 to determine the tile and sample masks. MaskSeq also consolidates stack masks and passes this information to the master state machine 901. The master state uses the stack masks, along with another signal that indicates whether the entire section is invalid, to control state transitions in SliceState 1002 and SlabState 1003.

Note that after a ray is terminated, it can never become active again. This is an essential characteristic of the compositor stage 304 that reports ray termination. For example, if samples are discarded when the composited alpha exceeds a specified value, then the ray is terminated, because after the composited alpha exceeds the threshold, it will exceed it for the remainder of the ray.

### MaskMux Logic Block

During section processing, terminate commands from the compositor 304 mark terminated rays as invalid at a rate of one stamp per clock cycle. In parallel with that, StampState 1001 can mark rays as invalid at a rate of two per clock cycle, and or SliceState 1002 can mark entire tiles invalid.

MaskSeq 925 consolidates mask bits from the units 902-904 elements to determine the tile and sample masks. MaskSeq also consolidates stack masks and passes this information to the master state machine 1000. The master state uses the stack masks, along with a section invalid signal, to control state transitions in the SlabState and SliceState state machines.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A method for rendering graphic data as an image:
identifying graphic data that possibly contribute to the image;
reading the identified graphic data into a rendering pipeline;
generating samples in the rendering pipeline that possibly contribute to the image only for the identified graphic data; and
processing the identified graphic data and samples in the rendering pipeline only as long as the identified graphic data and sample continue to contribute to the image and discarding all other identified graphic data and samples from the pipeline.

2. The method of claim 1 wherein the graphic data is a volume data set including a plurality of voxels, and the image includes a plurality of pixels, and further comprising:
interpolating the voxels only for the identified samples; and
compositing the identified samples into the pixels only as long as the identified samples continue to contribute to the pixels of the image and discarding all other samples from the pipeline.

3. The method of claim 1 wherein the reading is performed at a lower rate than the generating to maximize throughput of the pipeline.

4. The method of claim 1 wherein the graphic data is a volume data set including a plurality of voxels, and further comprising:
partitioning the samples into stamps, slices, slabs and sections;
independently processing the stamps, slices, slabs, and section in a plurality of state machines of a pipeline controller, there being one state machine stamps, slices, slabs, and sections, respectively.

5. The method of claim 4 wherein the plurality of state machines execute on a plurality of execution units according to predetermined priorities.

6. An apparatus for rendering a volume data set including a plurality of voxels, comprising:
a plurality of parallel pipeline, each pipeline including a plurality of stages;
a plurality of buffers in series with each of the plurality of stages, the buffers arranged between the stages, and internal to the stages.
a controller issuing commands to the stage via a plurality of first-in-first-out queue, the commands issued prior to reading the voxels into the plurality of pipelines and prior to generating samples from for the voxels; and
means for synchronizing the commands with processing of the voxels and samples.

7. An apparatus for rendering graphic data stored in a memory, comprising:
a rendering pipeline including a plurality of stages;
a plurality of queues;
a controller, coupled in parallel to the stages via the queues, configured to issue output control signals to the stages via the queues; and
means for synchronizing the output control signals with the graphic data while processing the graphic data according to the output control signals in the stages to render an image representing the graphic data on an output device.

8. The apparatus of claim 7 further comprising:
a plurality of buffers coupled in series with the stages of the rendering pipeline.

9. The apparatus of claim 8 wherein the buffers are between the stages and internal to the stages.

10. The apparatus of claim 7 wherein the output control signals are issued in advance of being used by the stages of the rendering pipeline.

11. The apparatus of claim 7 wherein the output controller operates asynchronously with respect to the rendering pipeline.

12. The apparatus of claim 7 wherein a length of the rendering pipeline, measured in terms of a number of clock cycles required to process the graphic data through the pipeline, varies over time.

13. The apparatus of claim 7 wherein a peak rate at which the controller issues the output control signals is faster than a rate at which the stages use the output control signals.

14. The apparatus of claim 7 wherein the graphic data are passed to and from the rendering pipeline via the controller.

15. The apparatus of claim 14 wherein the graphic data are a volume data set organized as a plurality of miniblocks, and further comprising:
a memory interface configured to read the miniblocks at a rate of one miniblock per clock cycle.

16. The apparatus of claim 7 wherein the controller receives input control signals from the rendering pipeline, the input control signals indicate to the controller to stop passing graphic data to the rendering pipeline when any one of the queues is about to become full.

17. The apparatus of claim 16 wherein the input control signals include rendering pipeline status information for the controller.

18. The apparatus of claim 7 wherein the stages can process the graphic data at different rates.

19. The apparatus of claim 7 wherein the output control signals include tags to indicate beginnings and ends of various types of data structures into which the graphic data are organized and to time-align the output control signals with the data structures in the stages of the rendering pipelines.

20. The apparatus of claim 7 wherein the controller further comprises:
means for discarding particular graphic data before and after the particular graphic data are passed to the rendering pipeline when the controller determines the particular graphic data will not contribute to the image.

21. The apparatus of claim 20 wherein mask codes are associated with the graphic data to indicate discarding the particular graphic data.

22. The apparatus of claim 7 wherein the controller further comprises:
a master state machine;
a plurality of execution units; and
a plurality of logic elements coupled to each other.

23. The apparatus of claim 22 wherein the plurality of execution units further comprise:
means for reading and writing graphic data between a compositor stage of the rendering pipeline and the memory; and
means for accumulating depth values of the graphic data used by the compositor stage.

24. The apparatus of claim 23 wherein the controller issues one instruction to each of the execution units during each controller clock cycle, the execution units being identical in construction and operating in parallel on different portions of the graphic data.

25. The apparatus of claim 23 wherein the master state machine arbitrates between multiple threads executing on the execution units.

26. The apparatus of claim 25 wherin the threads are implemented as four co-routines that step through the graphic data at different levels of detail.

27. The apparatus of claim 25 wherein the master state machine further comprises:
four ray casting state machines, and wherein the master state machine schedules one of the threads for one of the ray casting state machines to execute on the execution units every controller clock cycle using a multiplexor and a master state arbitor, the scheduled thread and state machine having a highest priority and ready to execute.

28. The apparatus of claim 27 wherein the priority is based on an amount of graphic data to process by a particular state machine.

29. The apparatus of claim 27 wherein the priority is based on advancing a particular state machine with a longest latency.

30. The apparatus of claim 27 wherein the four ray casting state machines include a stamp, section, slice, and slab state machine.

31. The apparatus of claim 27 wherein the controller issues instructions and commands based on states of the four ray casting state machines, the commands to transfer graphic data, the instructions to perform arithmetic operations in the execution units.

32. The apparatus of claim 7 wherein the controller is coupled in parallel to a plurality of rendering pipelines.

33. A method for rendering graphic data stored in a memory, comprising:
reading the graphic data into a rendering pipeline including a plurality of stages;
issuing output control signals in a controller coupled in parallel to the stages of the rendering pipeline by queues;
synchronizing the output control signals with the graphic data; and
processing the graphic data according to the output control signals in the stages of the rendering pipeline to render an image representing the graphic data on an output device.

34. The method of claim 33 further comprising:
buffering the graphic data in a plurality of buffers coupled in series with the stages of the rendering pipeline.

35. The method of claim 34 wherein the buffers are between the stages and internal to the stages.

36. The method of claim 35 wherein the output control signals are issued in advance of being used by the stages of the rendering pipeline.

37. The method of claim 33 wherein the output controller operates asynchronously with respect to the rendering pipeline.

38. The method of claim 33 wherein a length of the rendering pipeline, measured in terms of a number of clock cycles required to process the graphic data through the pipeline, varies over time.

39. The method of claim 33 wherein a peak rate at which the controller issues the output control signals is faster than a rate at which the stages use the output control signals.

40. The method of claim 33 wherein the graphic data are read into the rendering pipeline via the controller.

41. The method of claim 33 wherein the stages can process the graphic data at different rates.
